# EUROPEAN PATENT APPLICATION

(11) **EP 4 521 096 A1**
(43) Date of publication of application: **12.03.2025**
(21) Application number: 22967567.3
(22) Date of filing: 07.12.2022
(51) Int. Cl.: G01N 9/24, G01T 1/20, G06F 15/16

(54) **SURFACE DENSITY MEASUREMENT DEVICE**

(71) Applicant: Contemporary Amperex Technology (Hong Kong) Limited, Hong Kong (HK)
(72) Inventor: ZHEN, Zhihui, Ningde, Fujian 352100 (CN); ZHANG, Jingdong, Ningde, Fujian 352100 (CN); ZHAN, Bingyang, Ningde, Fujian 352100 (CN); WANG, Qiangjun, Ningde, Fujian 352100 (CN); CHEN, Weigang, Ningde, Fujian 352100 (CN); YAN, Liangjie, Ningde, Fujian 352100 (CN); WU, Qian, Ningde, Fujian 352100 (CN)
(74) Representative: Ran, Handong
(86) International application number: PCT/CN2022/137285
(87) International publication number: WO 2024/119407

(57) **Abstract**

A surface density measurement device. The surface density measurement device comprises a radioactive source assembly (10) and a detection assembly (22). The radioactive source assembly (10) comprises an accommodating member (11) and a radioactive source (12) provided in the accommodating member (11), and a first opening (11a) is formed in the accommodating member (11), so that rays of the radioactive source (12) can be emitted by the first opening (11a). A detector (20) comprises a scintillator (21) and the detection assembly (22), and the scintillator (21) is arranged corresponding to or close to the first opening (11a), so that some of the rays emitted from the first opening (11a) can be transmitted to a piece under measurement and the remaining rays can be absorbed by the scintillator (21) and converted into photons. The detection assembly (22) is connected to the scintillator (21) and adapted to work in conjunction with the scintillator (21), so as to treat the photons and obtain an intensity value of the rays. The quality of electrode sheet coating can be improved.

## Description

### TECHNICAL FIELD

This application relates to the field of battery technologies and specifically to an areal density detection apparatus.

### BACKGROUND

Energy saving and emission reduction are crucial for the sustainable development of the automobile industry. Electric vehicles, with their advantages in energy conservation and emission reduction, have become an important part of the sustainable development of the automobile industry. For electric vehicles, battery technology is a significant factor in their development.

In battery technology, the quality of electrode plate coating requires the active material layer to be uniformly applied on the electrode plate. Therefore, to ensure the uniformity of the active material layer on the electrode plate, it is necessary to precisely control the areal density of the electrode plate, and accurate detection is the basis for the quality control of electrode plate coating. Thus, how the precision of areal density detection of the electrode plate and the electrode plate coating uniformity are improved is an urgent technical problem that needs to be solved in battery technology.

### SUMMARY

This application provides an areal density detection apparatus that can improve the quality of electrode plate coating.

This application is implemented through the following technical solutions.

According to a first aspect, this application provides an areal density detection apparatus. The areal density detection apparatus includes: a radiation source component including a housing component and a radiation source disposed within the housing component, where the housing component is formed with a first opening, allowing rays from the radiation source to be emitted from the first opening; and a detector including: a scintillator, disposed corresponding to or close to the first opening, allowing a portion of the rays emitted from the first opening to be emitted to a specimen under test; and a detection component, connected to the scintillator and configured to cooperate with the scintillator to obtain an intensity value of the rays.

In the above solution, with the detector disposed, the scintillator and detection component are used to obtain the intensity value of the rays emitted by the radiation source component and acting on the specimen under test in real time (the intensity value may be an initial intensity value of the rays emitted by the radiation source), to avoid impact of the attenuation and fluctuation of the radiation source itself on the areal density detection results. This improves the accuracy of the areal density detection results of an electrode plate and improves the precision of areal density control and the quality of electrode plate coating, thereby improving the quality of the battery.

According to some embodiments of this application, the housing component includes a first wall, the first opening is formed in the first wall, and the scintillator is in contact with the first wall.

In the above solution, with the scintillator disposed at the first wall and in contact with the first wall, a portion of the rays emitted from the first opening can be effectively absorbed, and the detection component can obtain the intensity value of the rays based on this portion of rays. This improves the measurement accuracy of areal density detection and the quality of electrode plate coating, thereby improving the quality of the battery.

According to some embodiments of this application, the scintillator is formed with a second opening, the second opening runs through the scintillator along an opening direction of the first opening, and the second opening corresponds to the first opening.

In the above solution, the scintillator being formed with the second opening makes the scintillator relatively enclose the first opening, so that the rays emitted obliquely from the first opening can be effectively absorbed by the scintillator.

According to some embodiments of this application, size of the second opening in a first direction is smaller than size of the first opening in the first direction.

In the above solution, the second opening can act as a collimator opening. On one hand, the scintillator instead of a collimator is used for accurate collimation of the rays, saving space occupied by an additional collimator, thereby reducing a distance from the radiation source component to the specimen under test, and reducing the impact of space on the rays (for example, air in the space can weaken the intensity of the rays, leading to inaccurate results in areal density calculation). On the other hand, since the scintillator can absorb the rays acting on the wall of the second opening, the interference of this portion of the rays on areal density detection can be avoided, improving the measurement accuracy of areal density detection, thereby improving the quality of the battery. In addition, since the second opening acts as a collimator, its size can represent a minimum resolution size of detection. The size of the second opening in the first direction being set to be smaller than the size of the first opening in the first direction can improve the spatial resolution of the specimen under test in the first direction. In one embodiment, the first direction may be perpendicular to a strip movement direction of the electrode plate (which can be considered as a width direction of the electrode plate).

According to some embodiments of this application, the size of the second opening in the first direction is L, where 3 mm ≤ L ≤ 15 mm, and the first direction is perpendicular to the opening direction of the first opening.

In the above solution, if the size L of the second opening in the first direction is less than 3 mm, the detection efficiency of areal density is reduced. If the size L of the second opening in the first direction is greater than 15 mm, the spatial resolution in the first direction is reduced, affecting the accuracy of the detection results. Therefore, in some embodiments of this application, the size L of the second opening in the first direction is limited to 3 mm to 15 mm, which can ensure detection efficiency and spatial resolution in the first direction.

According to some embodiments of this application, size of the second opening in a second direction perpendicular to the first direction is larger than size of the first opening in the second direction.

In the above solution, since the second opening acts as a collimator, its size can represent a minimum resolution size of detection. The size of the second opening in the second direction being set to be larger than the size of the first opening in the second direction can increase the effective detection area of the specimen under test in the second direction, thereby improving detection accuracy. In one embodiment, the second direction may be a strip movement direction of the electrode plate (which can be considered as a length direction of the electrode plate).

According to some embodiments of this application, the size of the second opening in the second direction is W, where 15 mm ≤ W ≤ 60 mm, and the second direction is perpendicular to both the first direction and the opening direction of the first opening.

In the above solution, if the size W of the second opening in the second direction is less than 15 mm, the effective detection area of the detection apparatus is reduced, affecting detection accuracy. If the size W of the second opening in the second direction is greater than 60 mm, the spatial resolution in the second direction is reduced, affecting the accuracy of the detection results. Therefore, in some embodiments of this application, the size W of the second opening in the second direction is limited to 15 mm to 60 mm, which can increase the effective detection area, improve detection accuracy, and ensure spatial resolution in the second direction.

According to some embodiments of this application, the second opening is rectangular.

In the above solution, the second opening being designed to be rectangular makes a detection surface of the rays rectangular. This can increase the detection spatial resolution without affecting accuracy (without reducing the effective detection area), compared to the solution where the detection surface is circular.

According to some embodiments of this application, a part of the first opening not corresponding to the second opening is located in a projection of the scintillator on the first wall.

In the above solution, the portion of the rays emitted from the first opening may be emitted from the second opening to act on the specimen under test, and the remaining portion of the rays emitted from the first opening can be absorbed by the scintillator to implement real-time and effective detection of the intensity of the rays through the detection component. This improves the measurement accuracy of areal density detection and the quality of electrode plate coating, thereby improving the quality of the battery.

According to some embodiments of this application, the scintillator has a first surface facing the first opening, a second surface facing away from the first opening, an outer side surface connected between the first surface and the second surface, and an inner side surface corresponding to the second opening.

In the above solution, the scintillator has a simple structure, is easy to manufacture, and may be plate-shaped, and its first surface may be in contact with the first wall. This makes the entire areal density detection apparatus compact, effectively reducing the spatial distance from the first opening to the specimen under test, thereby reducing the impact of space on the rays, ensuring the accuracy of detection results, improving the weight control precision of the electrode plate and the quality of electrode plate coating, and improving the quality of the battery.

According to some embodiments of this application, the second surface and the outer side surface are each provided with a reflective layer.

In the above solution, the reflective layer is disposed on the second surface and the outer side surface of the scintillator to reflect photons within the scintillator, preventing photon refraction, ensuring that the detection component effectively obtains the intensity value of the rays.

According to some embodiments of this application, the detection component includes a light guide, a photomultiplier tube, and a processing module, one end of the photomultiplier tube is connected to the scintillator through the light guide, and the other end of the photomultiplier tube is connected to the processing module.

In the above solution, photons are transmitted to a photocathode of the photomultiplier tube through the light guide and then converted into electrons through the photoelectric effect, and the electrons are amplified in multiple stages within the photomultiplier tube and finally collected at an anode end of the photomultiplier tube. The processing module processes and analyzes signals collected at the anode end, performs digital-analog conversion, and finally outputs the initial intensity value of the rays from the radiation source, to implement real-time detection of the radiation source. This avoids the impact of the attenuation and fluctuation of the radiation source itself on the areal density detection results, improving the accuracy of the areal density detection results of the specimen under test such as the electrode plate, and improving the weight control precision of the electrode plate and the quality of electrode plate coating, thereby improving the quality of the battery.

According to some embodiments of this application, the light guide includes a first segment, a second segment, and a third segment connected in sequence, the first segment is connected to an outer side surface of the scintillator and extends along the second direction, the third segment is connected to the photomultiplier tube and extends along the opening direction of the first opening, and the second segment connects the first segment and the third segment.

In the above solution, the light guide includes the first segment, the second segment, and the third segment, to reasonably utilize a lateral space of the radiation source component, making the structure of the areal density detection apparatus compact.

According to some embodiments of this application, the light guide is provided in a quantity of two, the photomultiplier tube is provided in a quantity of two, and the two light guides are connected to the two photomultiplier tubes in one-to-one correspondence.

In the above solution, the provision of the two light guides and the two photomultiplier tubes improves the efficiency of converting photons into electrons, thereby improving the efficiency of processing and analysis by the processing module.

According to some embodiments of this application, the two groups of light guides and photomultiplier tubes are arranged on both sides of the scintillator symmetrically with respect to the second opening.

In the above solution, the two groups of light guides and photomultiplier tubes are symmetrically arranged with respect to the second opening, to reasonably utilize a lateral space of the scintillator and the radiation source component, making the structure of the areal density detection apparatus compact.

According to some embodiments of this application, the areal density detection apparatus further includes a shell, where the radiation source component and the detector are disposed inside the shell, a wall of the shell is formed with a third opening, and the third opening is disposed corresponding to the first opening to allow the rays to be emitted.

In the above solution, the shell is disposed, and the radiation source component and the detector are disposed inside the shell, to protect the radiation source component and the detector and provide dust prevention, water prevention, and other effects, ensuring the safety of the radiation source component and the detector.

According to some embodiments of this application, a surface of the scintillator facing away from the radiation source component is coplanar with an outer side wall of the shell formed with the third opening.

In the above solution, the surface of the scintillator facing away from the radiation source component being coplanar with the outer side wall of the shell formed can reduce the impact of the thickness of the shell on a spatial distance of the rays emitted from the first opening to the specimen under test, ensuring the accuracy of the detection results.

According to some embodiments of this application, the radiation source component further includes a mounting ring and an elastic component, the housing component is formed with a housing cavity communicating with the first opening, the elastic component is housed in the housing cavity, one end of the elastic component abuts against the housing component, the other end abuts against the radiation source, and the mounting ring is disposed at the first opening and used for limiting the radiation source in the housing cavity.

In the above solution, the elastic component and the mounting ring are disposed, to ensure that the radiation source stably abuts against the mounting ring under the elastic force of the elastic component, allowing the radiation source to emit rays from the first opening in a stable state, thereby ensuring effective areal density detection.

According to some embodiments of this application, the housing component includes a first housing part and a second housing part abutting against each other, the first housing part is formed with a housing slot at an end facing the second housing part, the second housing part is formed with a housing through hole running along an opening direction of the first opening, the housing slot communicates with the housing through hole to form the housing cavity, the housing through hole is formed with the first opening at an end of the second housing part facing away from the first housing part, the elastic component is disposed in the housing slot and the housing through hole, and the radiation source is disposed in the housing through hole.

In the above solution, the housing component includes the first housing part and the second housing part abutting against each other, the housing slot is formed in the first housing part, and the housing through hole is formed in the second housing part, so that the elastic component and the radiation source can be easily and simply assembled, ensuring the assembly efficiency of the radiation source component.

According to some embodiments of this application, the second housing part includes an outer cylinder, an inner cylinder, and a radiation shielding layer, the outer cylinder sleeves outside the inner cylinder, and the radiation shielding layer is filled between the outer cylinder and the inner cylinder.

In the above solution, the second housing part has a simple structure, and the radiation shielding layer can effectively isolate the rays generated by the radiation source, reducing the impact of the radiation source on the environment and ensuring the safety of the operators.

According to some embodiments of this application, the outer cylinder is a steel cylinder, the inner cylinder is an aluminum cylinder, and the radiation shielding layer is made of lead.

In the above solution, the outer cylinder is the steel cylinder, the inner cylinder is the aluminum cylinder, and the radiation shielding layer is made of lead. This can ensure that the radiation source is in a structurally stable environment, ensuring the safety of the radiation source. In addition, this can effectively isolate the rays generated by the radiation source, reducing the impact of the radiation source on the environment and ensuring the safety of the operators.

According to some embodiments of this application, the areal density detection apparatus further includes a ray receiver disposed apart from the radiation source component along an opening direction of the first opening, where the ray receiver is configured to receive the rays transmitted through the specimen under test and monitor intensity of the rays.

In the above solution, the ray receiver is disposed to receive the intensity of the rays transmitted through the specimen under test, so as to obtain the areal density of the specimen under test based on an areal density calculation formula.

The foregoing description is merely an overview and understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments. It should be understood that, the accompanying drawings below only show some embodiments of this application, and thus should not be considered as a limitation on the scope. Persons of ordinary skill in the art may still derive other related drawings from these accompanying drawings without creative efforts.
FIG. 1 is a three-dimensional schematic view of an areal density detection apparatus according to some embodiments of this application;
FIG. 2 is a schematic diagram of an areal density detection apparatus according to some embodiments of this application;
FIG. 3 is a three-dimensional schematic exploded view of a radiation source component and a detector according to some embodiments of this application;
FIG. 4 is a schematic bottom view of a radiation source component according to some embodiments of this application;
FIG. 5 is a schematic cross-sectional view along line A-A in FIG. 4;
FIG. 6 is a schematic diagram of a detector according to some embodiments of this application;
FIG. 7 is a schematic diagram of a shell according to some embodiments of this application;
FIG. 8 is a schematic internal diagram of an areal density detection apparatus according to some embodiments of this application; and
FIG. 9 is a schematic diagram of an areal density detection apparatus with a ray receiver according to some embodiments of this application.

Reference signs: 10. radiation source component; 11. housing component; 110. first wall; 11a. first opening; 111. first housing part; 1110. housing slot; 1111. flange; 112. second housing part; 1120. housing through hole; 1121. outer cylinder; 1122. inner cylinder; 1123. radiation shielding layer; 12. radiation source; 20. detector; 21. scintillator; 210. first surface; 211. second surface; 212. outer side surface; 213. inner side surface; 21a. second opening; 22. detection component; 220. light guide; 221. photomultiplier tube; 222. processing module; 2200. first segment; 2201. second segment; 2202. third segment; 30. shell; 30a. third opening; 31. ventilation hole; 32. wire connector; 40. mounting ring; 41. elastic component; 50. ray receiver; a. electrode plate; z. opening direction of first opening; x. first direction; and y. second direction.

### DESCRIPTION OF EMBODIMENTS

To make the objectives, technical solutions, and advantages of some embodiments of this application clearer, the following clearly describes the technical solutions in some embodiments of this application with reference to the accompanying drawings in some embodiments of this application. Apparently, these embodiments described are some rather than all embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of A; presence of both A and B; and presence of B. In addition, the character "/" in this application generally indicates an "or" relationship between contextually associated objects.

In the embodiments of this application, the same reference signs denote the same members. For brevity, in different embodiments, detailed descriptions of the same members are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, the battery includes an electrode assembly and an electrolyte. The electrode assembly includes electrode plates and a separating piece. The electrode plates include a positive electrode plate and a negative electrode plate. The separating piece may be a separator. The electrode assembly is a wound structure, with the positive electrode plate, negative electrode plate, and separator stacked and wound to form the electrode assembly. Working of the battery mainly relies on migration of metal ions between the positive electrode plate and the negative electrode plate. The positive electrode plate includes a positive electrode plate current collector and a positive electrode plate active substance layer. The positive electrode plate active substance layer is applied on a surface of the positive electrode plate current collector through a coating process. The part of positive electrode plate current collector uncoated with the positive electrode plate active substance layer protrudes out of the part of positive electrode plate current collector coated with the positive electrode plate active substance layer and serves as a positive tab. A lithium-ion battery is used as an example, for which, the positive electrode plate current collector may be made of aluminum and the positive electrode plate active substance may be lithium cobaltate, lithium iron phosphate, ternary lithium, lithium manganate, or the like. The negative electrode plate includes a negative electrode plate current collector and a negative electrode plate active substance layer. The negative electrode plate active substance layer is applied on a surface of the negative electrode plate current collector through a coating process. The part of negative electrode plate current collector uncoated with the negative electrode plate active substance layer protrudes out of the part of negative electrode plate current collector coated with the negative electrode plate active substance layer and serves as a negative tab. The negative electrode plate current collector may be made of copper, and the negative electrode plate active substance may be carbon, silicon, or the like. The separator may be made of PP (polypropylene, polypropylene), PE (polyethylene, polyethylene), or the like. The separator features electronic insulation and is used to separate the positive electrode plate and the negative electrode plate that are adjacent to each other, so as to prevent a short circuit of the positive electrode plate and the negative electrode plate that are adjacent to each other.

The development of battery technology must consider various design factors, such as energy density, discharge capacity, and other performance parameters. Additionally, the quality of the battery must also be considered, as the quality of the battery affects its performance.

For batteries, factors that affect the quality of the battery mainly include the quality of an electrode plate, and an important technical indicator of electrode plate quality is the quality of electrode plate coating, that is, the uniformity of an active substance layer on the electrode plate. Therefore, to ensure the uniformity of the active substance layer on the electrode plate, it is necessary to precisely control the areal density of the electrode plate, and accurate detection is the basis for the quality control of electrode plate coating. The inventors of this application have found that the accuracy of existing areal density detection results is low, leading to ineffective control of electrode plate coating quality. The inventors have further found that existing electrode plate production uses β-Ray densitometers for coating quality control, with β sources using natural radiation sources. The intensity value of the radiation source itself changes over time, showing attenuation and ±10% fluctuation, and the attenuation of the radiation source is uncertain in both time and space (that is, at time T1, the radiation intensity of the radiation source I₀=N1; at time T2, the radiation intensity of the radiation source I₀=N2, N1≠N2). However, the areal density m=1/λ ln(I₀/I), where I is the intensity of the rays after the rays have passed through the electrode plate, which can be obtained by a ray receiver, and I₀ (referring to the intensity of the rays before passing through the electrode plate) fluctuates, leading to fluctuating detection results, which do not reflect the true areal density. The intensity of the rays greatly affects the accuracy of a detection system, and the existing technology uses the average value of decay of the radiation source decay as I₀, or periodically calibrates the intensity of the rays passing through the air as I₀, which does not reflect the fluctuation of the radiation source itself, leading to low precision of areal density detection and uncontrolled electrode plate coating quality, thus leading to low battery quality.

Therefore, to solve the problem of low battery quality caused by uncontrolled electrode plate coating quality due to low precision of areal density detection, the inventors, after in-depth research, have designed an areal density detection apparatus. The areal density detection apparatus includes a radiation source component and a detector. The radiation source component is configured to provide rays for areal density detection of the electrode plate, and the detector includes a scintillator and a detection component. The scintillator is configured to absorb a portion of the rays provided by the radiation source component and convert this portion of the rays into photons, cooperating with the detection component to obtain an intensity value of the rays.

In the above solution, because the intensity of the current rays can be obtained in real time through the scintillator and the detection component during the areal density detection process of the electrode plate, the problem of fluctuation in detection results caused by the attenuation and fluctuation of the radiation source is solved. This ensures that the detection results can reflect the true areal density, guarantees the accuracy of the areal density detection results, and controls the quality of electrode plate coating, thereby improving the quality of the battery.

The areal density detection apparatus disclosed in the embodiments of this application can be used not only for the areal density detection of electrode plates but also for other specimens under test requiring areal density detection, such as paper and metal sheets.

For ease of description, the following embodiments describe the specimen under test as an electrode plate.

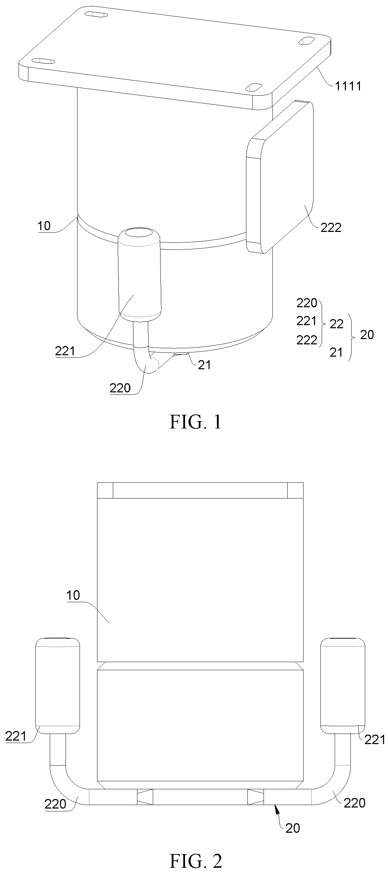

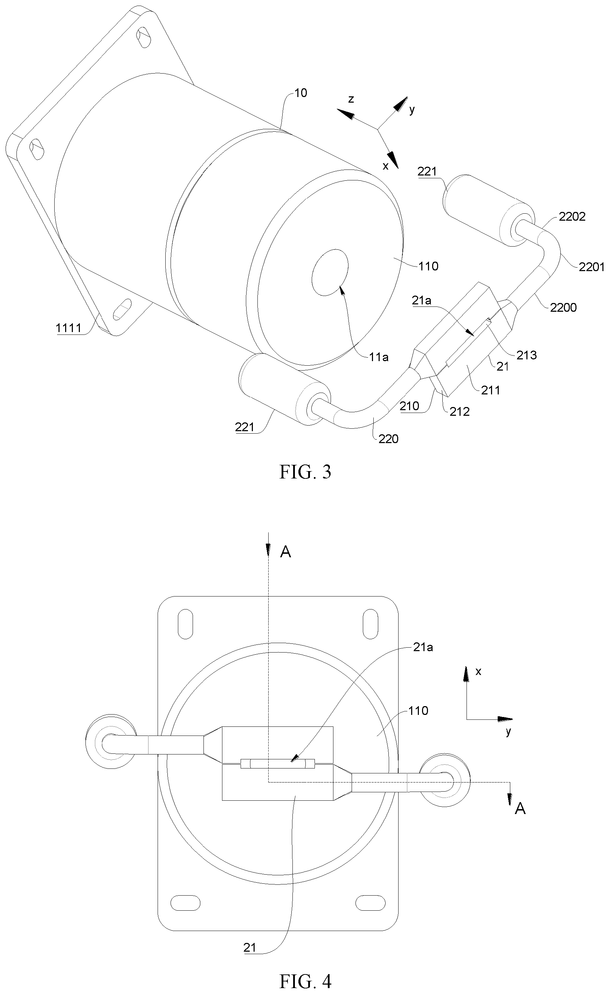

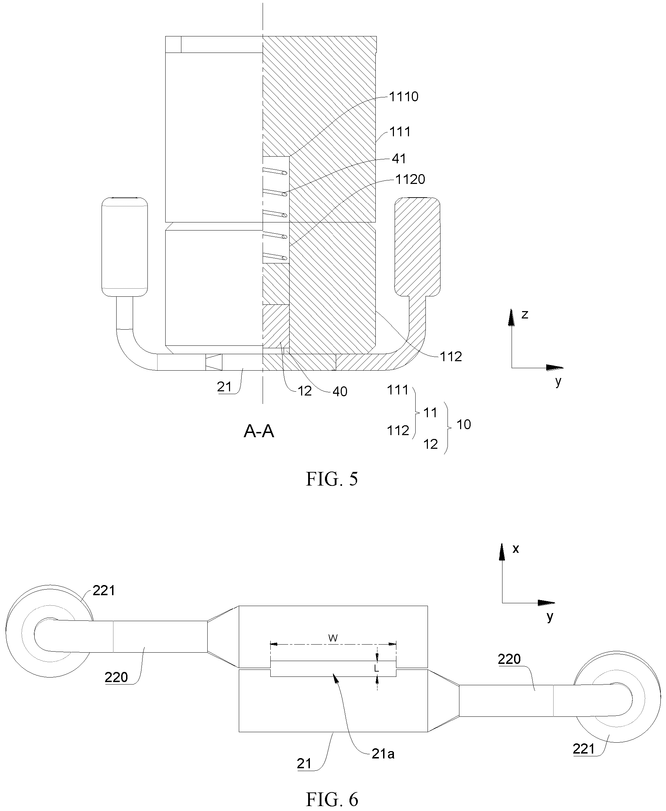

According to some embodiments of this application, referring to FIGs. 1 to 5, FIG. 1 is a three-dimensional diagram of an areal density detection apparatus according to some embodiments of this application, FIG. 2 is a schematic diagram of an areal density detection apparatus according to some embodiments of this application, FIG. 3 is a three-dimensional exploded view of a radiation source component 10 and a detector 20 according to some embodiments of this application, FIG. 4 is a bottom view of a radiation source component 10 according to some embodiments of this application, and FIG. 5 is a cross-sectional view along line A-A in FIG. 4. The areal density detection apparatus includes a radiation source component 10 and a detector 20. The radiation source component 10 includes a housing component 11 and a radiation source 12 disposed within the housing component 11, and the housing component 11 is formed with a first opening 11a, allowing rays from the radiation source 12 to be emitted from a first opening 11a. The detector 20 includes a scintillator 21 and a detection component 22. The scintillator 21 is disposed corresponding to or close to the first opening 11a, allowing a portion of the rays emitted from the first opening 11a to be emitted to a specimen under test. The detection component 22 is connected to the scintillator 21 and configured to cooperate with the scintillator 21 to obtain an intensity value of the rays.

The housing component 11 can serve as a part for accommodating the radiation source 12, with an internal cavity for housing the radiation source 12, and its wall formed with the first opening 11a. The rays emitted by the radiation source 12 can be emitted from the first opening 11a. The emission source is a part with radiation capable of emitting rays, cooperating with a ray receiver 50 to achieve the areal density detection of the electrode plate. The emission source may be an existing β source or an α source.

The scintillator 21 may be a part that can absorb rays and convert the rays into photons. In some embodiments, the scintillator 21 may be an inorganic scintillator 21; in other embodiments, the scintillator 21 may be an organic scintillator 21.

"The scintillator 21 is disposed corresponding to or close to the first opening 11a" may include the following situations: the scintillator 21 is located inside the first opening 11a and partially covers the first opening 11a; the scintillator 21 is located outside the first opening 11a and partially covers the first opening 11a; and the scintillator 21 does not cover the first opening 11a but is located on an emission path of the rays, to absorb a portion of the rays.

The detection component 22 may be a part capable of receiving photons converted by the scintillator 21 and processing these photons to obtain the intensity value of the rays. In some embodiments, based on a percentage of the portion of the rays absorbed by the scintillator 21 in a total amount of the rays, the intensity value of the rays can be calculated.

"The intensity value of the rays" can refer to an initial intensity value of the rays emitted by the radiation source 12, or can be understood as a real-time intensity value of the rays from the radiation source 12.

In the areal density calculation formula for the electrode plate, m=1/λ ln(I₀/I), (where m is an areal density of the electrode plate, λ is an absorption coefficient of the electrode plate areal density, I is an intensity of the rays after the rays have passed through the electrode plate), I can be obtained by the ray receiver 50, and I₀ can be determined based on the current regular calibration of the intensity of the rays passing through the air and the "intensity value of the rays" obtained by the detector 20.

In the above solution, with the detector 20 disposed, the scintillator 21 and the detection component 22 are used to obtain the intensity value of the rays emitted by the radiation source component 10 and acting on the specimen under test in real time, to avoid the impact of the attenuation and fluctuation of the radiation source 12 itself on the detection results of areal density. This improves the accuracy of the areal density detection results of the specimen under test such as the electrode plate, and improves the precision of areal density control and the quality of electrode plate coating, thereby improving the quality of the battery.

According to some embodiments of this application, referring to FIGs. 2 and 3, the housing component 11 includes a first wall 110, the first opening 11a is formed in the first wall 110, and the scintillator 21 is in contact with the first wall 110.

In some embodiments, the first wall 110 may be a wall of the housing component 11 facing the scintillator 21, and the first opening 11a is formed in the first wall 110.

The scintillator 21 being in contact with the first wall 110 may mean that the scintillator 21 is located outside the housing component 11 and covers a part of the first opening 11a, or mean that the scintillator 21 is located outside the housing component 11 and aligned with the opening (not covering the first opening 11a). The scintillator 21 being in contact with the first wall 110 allows the scintillator 21 to effectively absorb the rays emitted from the first opening 11a.

In the above solution, the scintillator 21 is disposed at the first wall 110 and in contact with the first wall 110, which can effectively absorb a portion of the rays emitted from the first opening 11a. Therefore, the detection component 22 can obtain the intensity value of the rays based on this portion of the rays, improving the measurement accuracy of areal density detection, thereby improving the quality of the battery.

According to some embodiments of this application, as shown in FIG. 3, the scintillator 21 is formed with a second opening 21a, the second opening 21a runs through the scintillator 21 along an opening direction z of the first opening 11a, and the second opening 21a corresponds to the first opening 11a.

The second opening 21a is a hole structure formed in the scintillator 21, running through two opposite end faces of the scintillator 21 along the opening direction z of the first opening 11a. The second opening 21a running through the scintillator 21 along the opening direction z of the first opening 11a may mean that the second opening 21a and the first opening 11a have the same opening direction z, and the rays emitted from the first opening 11a can pass through the second opening 21a to act on the electrode plate.

In the above solution, the second opening 21a being formed in the scintillator 21 makes the scintillator relatively enclose the first opening, so that the rays emitted obliquely from the first opening 21a can be effectively absorbed by the scintillator 21.

According to some embodiments of this application, referring to FIG. 3, size of the second opening 21a in a first direction x is smaller than size of the first opening 11a in the first direction x.

In some embodiments, in the first direction x, the second opening 21a is smaller than the first opening 11a, allowing the rays emitted from the first opening 11a to have a reduced emission area in the first direction x under the collimation of the second opening 21a, thereby reducing the effective area of the rays acting on the electrode plate.

In one embodiment, the first direction x may be perpendicular to a strip movement direction of the electrode plate (which can be considered as a width direction of the electrode plate).

In the above solution, the second opening can act as a collimator opening. On one hand, the scintillator 21 instead of a collimator is used for accurate collimation of the rays, saving space occupied by an additional collimator, thereby reducing a distance from the radiation source component 10 to the specimen under test, and reducing the impact of space on the rays (for example, air in the space can weaken the intensity of the rays, leading to inaccurate results in areal density calculation). On the other hand, since the scintillator 21 can absorb the rays acting on the wall of the second opening 21a, the interference of this portion of the rays on areal density detection can be avoided, improving the measurement accuracy of areal density detection, thereby improving the quality of the battery. In addition, since the second opening 21a acts as a collimator, its size can represent a minimum resolution size of detection. The size of the second opening 21a in the first direction x being smaller than the size of the first opening 11a in the first direction x can improve the spatial resolution of a tab in the first direction x (since the size of the second opening 21a in the first direction x is smaller, the size of the light spot of the rays acting on the electrode plate in the first direction can be reduced, thus in the first direction x, the rays detect a smaller unit area on the electrode plate, therefore the detection resolution of the rays on the electrode plate is improved). In some embodiments, the areal density detection apparatus can move along the first direction x under the action of a robotic arm or a linear output device. The electrode plate moves normally. The areal density detection apparatus scans the electrode plate while moving along the first direction x, achieving efficient areal density detection of the electrode plate.

According to some embodiments of this application, referring to FIG. 6, FIG. 6 is a schematic diagram of a detector 20 according to some embodiments of this application. The size of the second opening 21a in the first direction x is L, satisfying 3 mm ≤ L ≤ 15 mm, and the first direction x is perpendicular to the opening direction z of the first opening 11a.

In some embodiments, the size L of the second opening 21a in the first direction x may be 3 mm, 4 mm, 5 mm, 6 mm, ..., 13 mm, 14 mm, or 15 mm, that is, the size L of the second opening 21a in the first direction x may be any value between 3 mm and 15 mm.

In the above solution, if the size L of the second opening 21a in the first direction x is less than 3 mm, the detection efficiency of areal density is reduced. If the size L of the second opening 21a in the first direction x is greater than 15 mm, the spatial resolution in the first direction x is reduced, affecting the accuracy of the detection results. Therefore, in some embodiments of this application, the size L of the second opening 21a in the first direction x is limited to 3 mm to 15 mm, which can ensure detection efficiency and spatial resolution in the first direction x.

In other embodiments, the size of the second opening 21a in the first direction x is not limited, which may be less than 3 mm or greater than 15 mm.

According to some embodiments of this application, as shown in FIG. 3, the size of the second opening 21a in a second direction y perpendicular to the first direction x is larger than the size of the first opening 11a in the second direction y.

In some embodiments, in the second direction y, the second opening 21a is larger than the first opening 11a, allowing the rays emitted from the first opening 11a to have an increased emission area in the second direction y under the collimation of the second opening 21a, thereby increasing an effective area of the rays acting on the electrode plate.

The first direction x and the second direction y are perpendicular to each other. In one embodiment, the second direction y may be a strip movement direction of the electrode plate (which can be considered as a length direction of the electrode plate).

In the above solution, since the second opening 21a acts as a collimator, its size can represent a minimum resolution size of detection. The size of the second opening 21a in the second direction y being larger than the size of the first opening 11a in the second direction y can increase the effective detection area of the specimen under test in the second direction y, thereby improving detection accuracy (since the size of the second opening 21a in the second direction y is larger, the size of the light spot of the rays acting on the electrode plate in the second direction can be increased, making the overall area of the light spot larger, thereby reducing the risk of missing detection due to insufficient ray collection and improving detection accuracy).

According to some embodiments of this application, as shown in FIG. 6, the size of the second opening 21a in the second direction y is W, satisfying 15 mm ≤ W ≤ 60 mm, and the second direction y is perpendicular to both the first direction x and the opening direction z of the first opening 11a.

In some embodiments, the size W of the second opening 21a in the second direction y may be 15 mm, 16 mm, 17 mm, 18 mm, ..., 58 mm, 59 mm, or 60 mm, that is, the size W of the second opening 21a in the second direction y may be any value between 15 mm and 60 mm.

In the above solution, if the size W of the second opening 21a in the second direction y is less than 15 mm, the effective detection area of the detection apparatus is reduced, affecting detection accuracy. If the size W of the second opening 21a in the second direction y is greater than 60 mm, the spatial resolution in the second direction y is reduced, affecting the accuracy of the detection results. Therefore, in some embodiments of this application, the size W of the second opening 21a in the second direction y is limited to 15 mm to 60 mm, which can increase the effective detection area, improve detection accuracy, and ensure spatial resolution in the second direction y.

In other embodiments, the size of the second opening 21a in the second direction y is not limited, which may be less than 15 mm or greater than 60 mm.

According to some embodiments of this application, as shown in FIG. 3, the second opening 21a is rectangular.

In some embodiments, the first opening 11a is circular, and the rays emitted from the first opening 11a form an elliptical light spot. The second opening 21a being rectangular can collimate the elliptical light spot into a rectangular light spot.

In the above solution, the second opening 21a being rectangular makes the emission range of the rays rectangular, ensuring the effective window area for ray emission and increasing the detection spatial resolution without affecting accuracy (without reducing the effective detection area), thereby improving the quality of electrode plate coating.

According to some embodiments of this application, referring to FIGs. 3 and 4, a part of the first opening 11a not corresponding to the second opening 21a is located in a projection of the scintillator 21 on the first wall 110.

A part of the first opening 11a corresponding to the second opening 21a refers to a part where the first opening 11a and the second opening 21a overlap and are interconnected, that is, corresponding to the effective portion of the rays emitted from the first opening 11a to act on the electrode plate.

The part of the first opening 11a not corresponding to the second opening 21a refers to the remaining part of the first opening 11a, that is, corresponding to the ineffective portion of the rays emitted from the first opening 11a but not passing through the second opening 21a and not acting on the electrode plate.

The part of the first opening 11a not corresponding to the second opening 21a being located in the projection of the scintillator 21 on the first wall 110 means that the scintillator 21 can absorb all the ineffective portion of the rays.

In the above solution, the portion of the rays emitted from the first opening 11a may be emitted from the second opening 21a to act on the specimen under test, and the remaining portion of the rays emitted from the first opening 11a can be absorbed by the scintillator 21 to implement real-time and effective detection of the intensity of the rays through the detection component 22. This improves the measurement accuracy of areal density detection, thereby improving the quality of the battery.

According to some embodiments of this application, as shown in FIG. 3, the scintillator 21 has a first surface 210 facing the first opening 11a, a second surface 211 facing away from the first opening 11a, an outer side surface 212 connected between the first surface 210 and the second surface 211, and an inner side surface 213 corresponding to the second opening 21a.

The first surface 210 may be a flat surface, which is a surface of the scintillator 21 facing the first opening 11a. The second surface 211 may alternatively be a flat surface, which is a surface of the scintillator 21 facing away from the first opening 11a. The outer side surface 212 may be a peripheral surface of the scintillator 21. The inner side surface 213 is an inner wall surface of the second opening 21a.

In the above solution, the scintillator 21 has a simple structure, is easy to manufacture, and may be plate-shaped, and its first surface 210 may be in contact with the first wall 110. This makes the entire areal density detection apparatus compact, effectively reducing the spatial distance from the first opening 11a to the specimen under test, thereby reducing the impact of space on the rays, ensuring the accuracy of detection results, improving the weight control precision of the electrode plate, allowing the quality of electrode plate coating to be controlled, and improving the quality of the battery.

According to some embodiments of this application, the second surface 211 and the outer side surface 212 are each provided with a reflective layer (not shown in the figures).

The reflective layer may refer to a high-reflectivity material wrapping the second surface 211 and outer side surface 212 of the scintillator 21, and is used to reflect photons and prevent photon refraction. In some embodiments, the reflective layer may be a high-reflectivity coating applied on the second surface 211 and outer side surface 212 of the scintillator 21.

In the above solution, the reflective layer is disposed on the second surface 211 and outer side surface 212 of the scintillator 21, so that the scintillator 21 can absorb all rays except the rays emitted from the first opening 11a. This reduces reflections outside the scintillator 21, narrows the radiation solid angle, reduces noise signals, and improves system detection accuracy. In addition, with the reflective layer disposed, photon refraction within the scintillator 21 can be prevented, ensuring that the detection component 22 effectively obtains the intensity value of the rays.

According to some embodiments of this application, the detection component 22 includes a light guide 220, a photomultiplier tube 221, and a processing module 222, one end of the photomultiplier tube 221 is connected to the scintillator 21 through the light guide 220, and the other end of the photomultiplier tube 221 is connected to the processing module 222.

The light guide 220 is a part connecting the scintillator 21 and the photomultiplier tube 221, and the light guide 220 is used to effectively transmit photons to the photocathode of the photomultiplier tube 221. In some embodiments, the material of the light guide 220 may be polyethylene methylbenzene, polystyrene plastic, acrylic, quartz glass, or the like. In some embodiments, the shape of the light guide 220 may be cylinder, truncated cone, truncated pyramid, strip, filament, or the like.

The photomultiplier tube 221 may be an electronic device that converts photons into electrons (electrical signals).

In some embodiments, the photomultiplier tube 221 can be connected to the processing module 222 through wires. The processing module 222 can be an electronic device capable of performing data analysis of the electrons provided by the photomultiplier tube 221, performing digital-analog conversion, and finally outputting the intensity value of the rays.

In the above solution, photons are transmitted to a photocathode of the photomultiplier tube 221 through the light guide 220 and then converted into electrons through the photoelectric effect, and the electrons are amplified in multiple stages within the photomultiplier tube 221 and finally collected at an anode end of the photomultiplier tube 221. The processing module 222 processes and analyzes signals collected at the anode end, performs digital-analog conversion, and finally outputs the initial intensity value of the rays from the radiation source 12, to implement real-time detection of the radiation source 12. This avoids the impact of the attenuation and fluctuation of the radiation source 12 itself on the detection results of areal density, improving the accuracy of the areal density detection results of the specimen under test such as the electrode plate, improving the weight control precision of the electrode plate, and allowing the quality of electrode plate coating to be controlled, thereby improving the quality of the battery.

According to some embodiments of this application, as shown in FIG. 3, the light guide 220 includes a first segment 2200, a second segment 2201, and a third segment 2202 connected in sequence, the first segment 2200 is connected to an outer side surface 212 of the scintillator 21 and extends along the second direction y, the third segment 2202 is connected to the photomultiplier tube 221 and extends along the opening direction z of the first opening 11a, and the second segment 2201 connects the first segment 2200 and the third segment 2202.

In some embodiments, the light guide 220 may include the first segment 2200, the second segment 2201, and the third segment 2202, with the cross-sections of the first segment 2200, the second segment 2201, and the third segment 2202 all being circular. The first segment 2200 can extend along the second direction y and is parallel to a plane where the scintillator 21 is located. The third segment 2202 can extend towards the radiation source component 10 along the opening direction z of the first opening 11a. The second segment 2201 is angled to implement transition between the first segment 2200 and the third segment 2202.

In the above solution, the light guide 220 includes the first segment 2200, the second segment 2201, and the third segment 2202, to reasonably utilize a lateral space of the radiation source component 10, making the structure of the areal density detection apparatus compact.

According to some embodiments of this application, the light guide 220 is provided in a quantity of two, the photomultiplier tube 221 is provided in a quantity of two, and the two light guides 220 are connected to the two photomultiplier tubes 221 in one-to-one correspondence.

As shown in FIGs. 2 and 3, the light guides 220 and the photomultiplier tubes 221 are in one-to-one correspondence. The provision of the two light guides 220 and the two photomultiplier tubes 221 improves the efficiency of converting photons into electrons, thereby improving the efficiency of processing and analysis by the processing module 222.

According to some embodiments of this application, two groups of light guides 220 and photomultiplier tubes 221 are symmetrically arranged on both sides of the scintillator 21 with respect to the second opening 21a.

As shown in FIG. 3, the two groups of light guides 220 and photomultiplier tubes 221 can be symmetrically arranged with respect to the center of the second opening 21a in a mirror image.

In the above solution, the two groups of light guides 220 and photomultiplier tubes 221 are symmetrically arranged with respect to the second opening 21a, to reasonably utilize the lateral space of the scintillator 21 and the radiation source component 10, making the structure of the areal density detection apparatus compact.

In some embodiments, the scintillator 21 is composed of two parts, and the two parts are arranged side by side along the first direction x. One group of light guides 220 and photomultiplier tubes 221 are disposed in one part of the scintillator 21, and the other group of light guides 220 and photomultiplier tubes 221 are disposed in the other part of the scintillator 21.

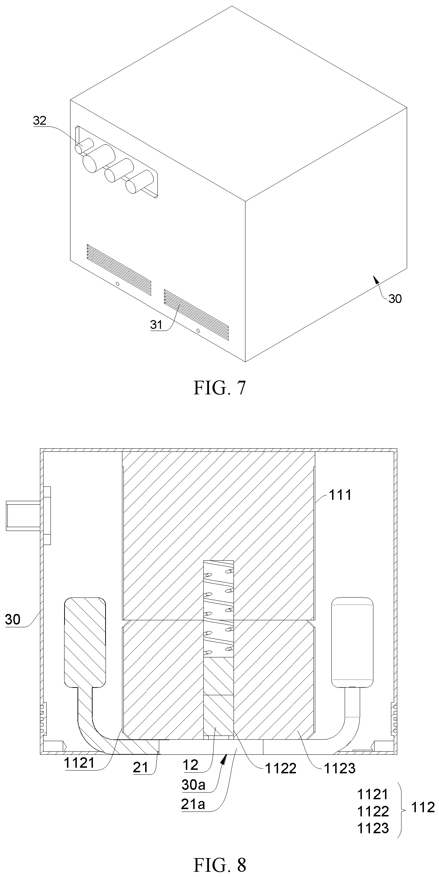

According to some embodiments of this application, as shown in FIGs. 7 and 8, FIG. 7 is a schematic diagram of a shell 30 according to some embodiments of this application, and FIG. 8 is a schematic internal diagram of an areal density detection apparatus according to some embodiments of this application.

The areal density detection apparatus further includes the shell 30, where the radiation source component 10 and the detector 20 are disposed inside the shell 30, a wall of the shell 30 is formed with a third opening 30a, and the third opening 30a is disposed corresponding to the first opening 11a to allow the rays to be emitted.

In some embodiments, the shell 30 may be a sheet metal shell. The wall of the shell 30 is formed with the third opening 30a, allowing the rays emitted from the first opening 11a to be emitted from the third opening 30a to act on the electrode plate.

As shown in FIG. 7, the wall of the shell 30 may further be formed with ventilation holes 31, ensuring that the heat inside the shell 30 can be dissipated. In some embodiments, the intensity value of the rays obtained by the detection component 22 can be output to terminals such as computers, mobile phones, or tablets through wires. FIG. 7 shows a wire connector 32 disposed on the shell 30 for connecting the terminal. In some embodiments, a robotic arm can be connected to the shell 30 to drive the movement of the areal density detection apparatus for scanning the electrode plate.

In the above solution, the shell 30 is disposed, and the radiation source component 10 and the detector 20 are disposed inside the shell 30, to protect the radiation source component 10 and the detector 20, ensuring the safety of the radiation source component 10 and the detector 20.

According to some embodiments of this application, a surface of the scintillator 21 facing away from the radiation source component 10 is coplanar with an outer side wall of the shell 30 formed with the third opening 30a.

The surface of the scintillator 21 facing away from the radiation source component 10 being coplanar with the outer side wall of the shell 30 formed with the third opening 30a means that the scintillator 21 and the outer surface of the shell 30 formed with the third opening 30a are in a same plane.

In the above solution, the surface of the scintillator 21 facing away from the radiation source component 10 being coplanar with the outer side wall of the shell 30 can reduce the impact of the thickness of the shell 30 on a spatial distance of the rays emitted from the first opening 11a to the specimen under test, ensuring the accuracy of detection results.

According to some embodiments of this application, as shown in FIG. 5, the radiation source component 10 further includes a mounting ring 40 and an elastic component 41, the housing component 11 is formed with a housing cavity communicating with the first opening 11a, the elastic component 41 is housed in the housing cavity, one end of the elastic component 41 abuts against the housing component 11, the other end abuts against the radiation source 12, and the mounting ring 40 is disposed at the first opening 11a and used for limiting the radiation source 12 in the housing cavity.

The elastic component 41 may be a spring, providing elastic force to the radiation source 12 to ensure that the radiation source 12 always abuts against the mounting ring 40.

The mounting ring 40 is ring-shaped, and the rays emitted by the radiation source 12 can be emitted from an inner circle of the mounting ring 40. In some embodiments, a peripheral wall of the mounting ring 40 can be formed with external threads, and the external threads are threaded into a wall of the first opening 11a.

In some embodiments, the thickness of the mounting ring 40 is small, minimizing interference to the rays emitted from the first opening 11a.

In the above solution, the elastic component 41 and the mounting ring 40 are disposed, to ensure that the radiation source 12 stably abuts against the mounting ring 40 under the elastic force of the elastic component 41, allowing the radiation source 12 to emit rays from the first opening 11a in a stable state, thereby ensuring effective areal density detection.

According to some embodiments of this application, as shown in FIG. 5, the housing component 11 includes a first housing part 111 and a second housing part 112 abutting against each other, the first housing part 111 is formed with a housing slot 1110 at an end facing the second housing part 112, the second housing part 112 is formed with a housing through hole 1120 running along the opening direction z of the first opening 11a, the housing slot 1110 communicates with the housing through hole 1120 to form the housing cavity, the housing through hole 1120 is formed with the first opening 11a at an end of the second housing part 112 facing away from the first housing part 111, the elastic component 41 is disposed in the housing slot 1110 and the housing through hole 1120, and the radiation source 12 is disposed in the housing through hole 1120.

In some embodiments, as shown in FIG. 5, the first housing part 111 is located above the second housing part 112. Referring to FIG.s 1 and 3, the top of the first housing part 111 is formed with a flange 1111 to be fixed to the top wall of the shell 30 through bolts. The interior of the second housing part 112 is formed with a housing through hole 1120, and the elastic component 41 is inserted into the housing through hole 1120. One end of the elastic component 41 abuts against the bottom of the slot of the housing slot 1110 of the first housing part 111. The radiation source 12 is inserted into the housing through hole 1120, and the end of the radiation source 12 abuts against the other end of the elastic component 41. The mounting ring 40 is disposed at the end of the housing through hole 1120 facing away from the first housing part 111, implementing support and abutment for the radiation source 12 to prevent the radiation source 12 from coming out.

In the above solution, the housing component 11 includes the first housing part 111 and the second housing part 112 abutting against each other, the housing slot 1110 is formed in the first housing part 111, and the housing through hole 1120 is formed in the second housing part 112, so that the elastic component 41 and the radiation source 12 can be easily and simply assembled, ensuring the assembly efficiency of the radiation source component 10.

In some embodiments, the scintillator 21 is clamped between the second housing part 112 and the shell 30, allowing the scintillator 21 to fit snugly against the first wall 110.

According to some embodiments of this application, the second housing part 112 includes an outer cylinder 1121, an inner cylinder 1122, and a radiation shielding layer 1123. The outer cylinder 1121 sleeves outside the inner cylinder 1122, and the radiation shielding layer 1123 is filled between the outer cylinder 1121 and the inner cylinder 1122.

Along a radial direction of the second housing part 112, the outer cylinder 1121 is an outermost structure of the second housing part 112, the inner cylinder 1122 is an innermost structure of the second housing part 112, and the radiation shielding layer 1123 is a structure located in a middle layer of the second housing part 112.

In the above solution, the second housing part 112 has a simple structure, and the radiation shielding layer 1123 can effectively isolate the rays generated by the radiation source 12, reducing the impact of the radiation source 12 on the environment, and ensuring the safety of the operators.

According to some embodiments of this application, the outer cylinder 1121 is a steel cylinder, the inner cylinder 1122 is an aluminum cylinder, and the radiation shielding layer 1123 is made of lead.

In some embodiments, the material of the outer cylinder 1121 is steel, the material of the inner cylinder 1122 is aluminum, and the radiation shielding layer 1123 is made of lead poured between the outer cylinder 1121 and the inner cylinder 1122. In some other embodiments, the materials of the outer cylinder 1121 and the inner cylinder 1122 are not limited. In some other embodiments, the material of the radiation shielding layer 1123 is not limited.

In the above solution, the outer cylinder 1121 is the steel cylinder, the inner cylinder 1122 is the aluminum cylinder, and the radiation shielding layer 1123 is made of lead. This can ensure that the radiation source 12 is in a structurally stable environment, ensuring the safety of the radiation source 12. In addition, this can effectively isolate the rays generated by the radiation source 12, reducing the impact of the radiation source 12 on the environment, and ensuring the safety of the operators.

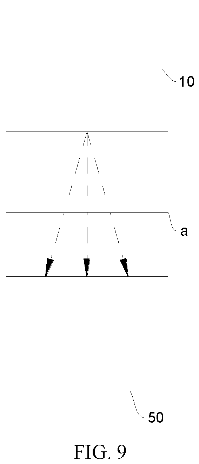

According to some embodiments of this application, as shown in FIG. 9, FIG. 9 is a schematic diagram of an areal density detection apparatus with a ray receiver 50 according to some embodiments of this application. In FIG. 9, an electrode plate a is shown. The detector 20 is not shown in FIG. 9.

The areal density detection apparatus further includes a ray receiver 50 disposed apart from the radiation source component 10 along the opening direction z of the first opening 11a, where the ray receiver 50 is configured to receive the rays transmitted through the specimen under test and monitor intensity of the rays.

The ray receiver 50 is an electronic device capable of receiving the rays emitted by the radiation source component 10 and passing through the specimen under test, that is, the electrode plate, and obtaining the intensity value of the rays.

In the above solution, the ray receiver 50 is disposed to receive the intensity of the rays transmitted through the specimen under test, so that the areal density of the specimen under test can be obtained based on an areal density calculation formula.

According to some embodiments of this application, as shown in FIGs. 1 to 9, the areal density detection apparatus includes a shell 30, a radiation source component 10, a detector 20, and a ray receiver 50. The radiation source component 10 and the detector 20 are disposed inside the shell 30. The radiation source component 10 includes a housing component 11 and a radiation source 12 disposed within the housing component 11, allowing rays emitted from the radiation source 12 to be emitted from a first opening 11a formed in the first wall 110 of the housing component 11. The detector 20 is a detector 20 with a scintillator 21, and the scintillator 21 of the detector 20 is disposed on the first wall 110 and covers part of the first opening 11a, to absorb a portion of the rays emitted from the first opening 11a and convert the portion of the rays into photons. The scintillator 21 is formed with a second opening 21a, that is, a collimator opening which is rectangular. Except for surfaces close to the first wall 110 and the inner side surface 213 of the collimator opening, rest surfaces of the scintillator 21 are wrapped with a high-reflectivity material to reflect photons and prevent photon refraction. The rays emitted from the collimator opening are used for detecting the areal density of the electrode plate. The collimator opening is disposed to be a rectangular window while an effective window area for ray emission (the area of the rays received by the ray receiver 50) is ensured. This reduces the size in the first direction x, narrows the radiation solid angle θ, reduces noise signals, and improves the resolution in the first direction x.

The photons converted by the scintillator 21 are processed by the light guide 220, photomultiplier tube 221, and processing module 222 of the detector 20, to obtain the real-time intensity value of the rays from the radiation source 12. The obtained real-time intensity value of the rays from the radiation source 12 is fed back to the detection system, and the detection system automatically adjusts a compensation coefficient based on the fluctuation of the intensity value (the areal density calculation formula for the electrode plate is m=1/λ ln(I₀/I), where I₀ is not only related to air quality and environmental temperature changes but also related to the real-time intensity of the radiation source, the detector 20 can obtain the real-time intensity value of the radiation source, so that the real-time accurate I₀ can be obtained through compensation), avoiding the impact of the attenuation and fluctuation of the radiation source 12 itself on the detection results of areal density, and improving the accuracy of the detection system.

The foregoing descriptions are merely preferred embodiments of this application and are not intended to limit this application. Persons skilled in the art understand that this application may have various modifications and variations. Any modification, equivalent replacement, and improvement made without departing from the spirit and principle of this application shall fall within the protection scope of this application.

## Claims

1. An areal density detection apparatus, comprising:
a radiation source component, comprising a housing component and a radiation source disposed within the housing component, wherein the housing component is formed with a first opening, allowing rays from the radiation source to be emitted from the first opening; and
a detector, comprising:
a scintillator, disposed corresponding to or close to the first opening, allowing a portion of the rays emitted from the first opening to be emitted to a specimen under test; and
a detection component, connected to the scintillator and configured to cooperate with the scintillator to obtain an intensity value of the rays.

2. The areal density detection apparatus according to claim 1, wherein
the housing component comprises a first wall, the first opening is formed in the first wall, and the scintillator is in contact with the first wall.

3. The areal density detection apparatus according to claim 2, wherein
the scintillator is formed with a second opening, the second opening runs through the scintillator along an opening direction of the first opening, and the second opening corresponds to the first opening.

4. The areal density detection apparatus according to claim 3, wherein
size of the second opening in a first direction is smaller than size of the first opening in the first direction.

5. The areal density detection apparatus according to claim 4, wherein
the size of the second opening in the first direction is L, where 3 mm ≤ L ≤ 15 mm, and the first direction is perpendicular to the opening direction of the first opening.

6. The areal density detection apparatus according to claim 4, wherein
size of the second opening in a second direction perpendicular to the first direction is larger than size of the first opening in the second direction.

7. The areal density detection apparatus according to claim 6, wherein
the size of the second opening in the second direction is W, where 15 mm ≤ W ≤ 60 mm, and the second direction is perpendicular to both the first direction and the opening direction of the first opening.

8. The areal density detection apparatus according to claim 6, wherein
the second opening is rectangular.

9. The areal density detection apparatus according to claim 3, wherein
a part of the first opening not corresponding to the second opening is located in a projection of the scintillator on the first wall.

10. The areal density detection apparatus according to any one of claims 3 to 9, wherein
the scintillator has a first surface facing the first opening, a second surface facing away from the first opening, an outer side surface connected between the first surface and the second surface, and an inner side surface corresponding to the second opening.

11. The areal density detection apparatus according to claim 10, wherein
the second surface and the outer side surface are each provided with a reflective layer.

12. The areal density detection apparatus according to any one of claims 3 to 11, wherein
the detection component comprises a light guide, a photomultiplier tube, and a processing module, one end of the photomultiplier tube is connected to the scintillator through the light guide, and the other end of the photomultiplier tube is connected to the processing module.

13. The areal density detection apparatus according to claim 12, wherein
the light guide comprises a first segment, a second segment, and a third segment connected in sequence, the first segment is connected to an outer side surface of the scintillator and extends along a second direction, the third segment is connected to the photomultiplier tube and extends along the opening direction of the first opening, and the second segment connects the first segment and the third segment.

14. The areal density detection apparatus according to claim 12 or 13, wherein
the light guide is provided in a quantity of two, the photomultiplier tube is provided in a quantity of two, and the two light guides are connected to the two photomultiplier tubes in one-to-one correspondence.

15. The areal density detection apparatus according to claim 14, wherein
the two groups of light guides and photomultiplier tubes are arranged on both sides of the scintillator symmetrically with respect to the second opening.

16. The areal density detection apparatus according to any one of claims 1 to 15, wherein
the areal density detection apparatus further comprises a shell, wherein the radiation source component and the detector are disposed inside the shell, a wall of the shell is formed with a third opening, and the third opening is disposed corresponding to the first opening to allow the rays to be emitted.

17. The areal density detection apparatus according to claim 16, wherein
a surface of the scintillator facing away from the radiation source component is coplanar with an outer side wall of the shell formed with the third opening.

18. The areal density detection apparatus according to any one of claims 1 to 17, wherein
the radiation source component further comprises a mounting ring and an elastic component, the housing component is formed with a housing cavity communicating with the first opening, the elastic component is housed in the housing cavity, one end of the elastic component abuts against the housing component, the other end abuts against the radiation source, and the mounting ring is disposed at the first opening and used for limiting the radiation source in the housing cavity.

19. The areal density detection apparatus according to claim 18, wherein
the housing component comprises a first housing part and a second housing part abutting against each other, the first housing part is formed with a housing slot at an end facing the second housing part, the second housing part is formed with a housing through hole running along an opening direction of the first opening, the housing slot communicates with the housing through hole to form the housing cavity, the housing through hole is formed with the first opening at an end of the second housing part facing away from the first housing part, the elastic component is disposed in the housing slot and the housing through hole, and the radiation source is disposed in the housing through hole.

20. The areal density detection apparatus according to claim 19, wherein
the second housing part comprises an outer cylinder, an inner cylinder, and a radiation shielding layer, the outer cylinder sleeves outside the inner cylinder, and the radiation shielding layer is filled between the outer cylinder and the inner cylinder.

21. The areal density detection apparatus according to claim 20, wherein
the outer cylinder is a steel cylinder, the inner cylinder is an aluminum cylinder, and the radiation shielding layer is made of lead.

22. The areal density detection apparatus according to any one of claims 1 to 21, further comprising:
a ray receiver disposed apart from the radiation source component along an opening direction of the first opening, wherein the ray receiver is configured to receive the rays transmitted through the specimen under test and monitor intensity of the rays.
